# EUROPEAN PATENT SPECIFICATION

(11) **EP 4 336 713 B1**
(45) Date of publication and mention of the grant of the patent: **11.11.2026**
(21) Application number: 24153707.5
(22) Date of filing: 19.07.2018
(51) Int. Cl.: F04C 23/00, F04C 25/02, F04C 29/00, H02K 5/128

(54) **VACUUM PUMPING SYSTEM HAVING AN OIL-LUBRICATED VACUUM PUMP**
VAKUUMPUMPSYSTEM MIT ÖLGESCHMIERTER VAKUUMPUMPE
SYSTÈME DE POMPAGE À VIDE COMPRENANT UNE POMPE À VIDE LUBRIFIÉE À L'HUILE

(43) Date of publication of application: 13.03.2024
(62) Document number(s) of the earlier application(s) in accordance with Art. 76 EPC: 18184580.1 / 3 597 922
(73) Proprietor: Agilent Technologies, Inc., Santa Clara, CA 95051 (US)
(72) Inventor: CARBONERI, Roberto, 10036 SETTIMO TORINESE (TO) (IT); LEPORE, Andrea, SANTA CLARA, 95051 (US); IANNUCCI, Giovanni, SANTA CLARA, 95051 (US); BERTALLOT, Andrea, SANTA CLARA, 95051 (US)
(74) Representative: Robba, Pierpaolo

(56) References cited:
- EP-B1- 2 729 667
- JP-A- 2005 184 958
- JP-A- 2006 342 721
- US-A- 5 923 108
- US-B2- 6 644 942

## Description

### Technical Field

The present invention relates to vacuum pumping systems and, more particularly, it concerns a vacuum pumping system having an oil-lubricated vacuum pump.

### Prior Art

Vacuum pumps are used to achieve vacuum conditions, i.e. for evacuating a chamber (so-called "vacuum chamber") and establishing sub-atmospheric pressure conditions in said chamber. Many different kinds of vacuum pumps, having different structures and operating principles, are known and each time a specific vacuum pump is to be selected according to the needs of a specific application, namely according to the degree of vacuum that is to be attained in the corresponding vacuum chamber.

In general, a vacuum pump comprises a pump casing, in which one or more pump inlets and one or more pump outlets are provided, and pumping elements, arranged in said pump casing and configured for pumping a gas from said pump inlet(s) to said pump outlet(s): by connecting the pump inlet(s) to the vacuum chamber, the vacuum pump allows the gas in the vacuum chamber to be evacuated, thus creating vacuum conditions in said chamber.

More specifically, in a kind of vacuum pumps, the pumping elements comprise a stator defining a pumping chamber and a rotor rotatable in said pumping chamber, and the stator and the rotor cooperate with each other for pumping the gas from the pump inlet(s) to the pump outlet (s). In such vacuum pumps, the rotor is generally mounted to a rotating shaft which is driven by a motor, namely by an electric motor.

Even more specifically, vacuum pumping systems are known in which the vacuum pump is connected to an oil tank, whereby oil can be transferred from the oil tank to the vacuum pump, and in particular to the pumping chamber, for acting as coolant and lubricating fluid and for sealing the chamber. Among such systems, those using rotary vane vacuum pumps can be mentioned, and the following description will refer to a system of that kind.

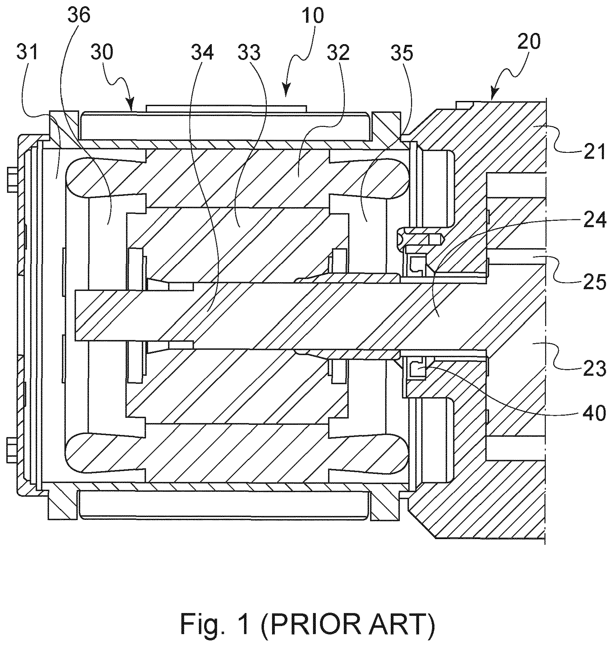

A conventional vacuum pumping system using a rotary vane vacuum pump is shown in Fig. 1 and is generally denoted 10.

Pumping system 10 essentially comprises a rotary vane vacuum pump 20 and an electric motor 30 for driving pump 20.

Pump 20 comprises a pump casing 21 in which one or more pump inlets and one or more pump outlets (not shown in the Figure) are defined. Pump casing 21, which is refined so as to act also as pump stator, internally defines a pumping chamber in which a pump rotor 23 eccentrically rotates. Rotor 23 is fastened to or integral with a pump shaft 24 driven in rotation by motor 30 and is provided with one or more radially slidable vanes 25 (only one being visible in the drawing) that, during rotation of the rotor, move in contact with the inner walls of the pumping chamber. As known, in such kind of pump, oil is introduced into the pumping chamber for lubricating and cooling the pump and separating the regions at different pressures.

Motor 30 in turn comprises a casing 31, fastened to pump casing 21 and enclosing a motor stator 32 and a motor rotor 33. Motor stator 32 and motor rotor 33 cooperate with each other so as to drive pump rotor 23 into rotation by means of a drive shaft 34, associated with motor rotor 33. Drive shaft 34 can be coupled to pump shaft 24 or it can be made as an integral unit with pump shaft 24 and pump rotor 23, as shown in the Figure. End walls 35, 36 close a chamber housing motor rotor 33 and rotatably support, in association with suitable rolling bearings, the end portions of shaft 34.

To prevent oil and possibly toxic gases present in the pumping chamber from passing to motor 30 and escaping in the environment through the motor casing, a dynamic seal 40, typically a lip seal, is provided around shaft 34 between motor casing 31 and pump casing 21. The dynamic seal is also to prevent dust inlet into the pumping chamber.

US Patent 6,644,942 discloses a pumping system in which the motor rotor and stator are accommodated in a resin jacket preventing lubricant present in a chamber adjacent to the motor module from leaking into the motor module itself. Yet, the prior art is concerned with a dry vacuum pump, in particular a dual-rotor pump with two parallel rotors coupled via a gear assembly located in a casing containing oil, and the chamber containing oil is not the pumping chamber, but is the casing housing the gear assembly. This pumping system still needs the provision of a lip seal around the shaft, at the wall separating the two chambers to be isolated.

Dynamic seals are rather expensive. Moreover, in the case of vacuum pumping systems comprising a rotary vane vacuum pump, these dynamic seals are the main cause of oil leaks during operation of the pump.

US 2005/260082 discloses a vacuum pumping system which comprises an oil-sealed vane rotary vacuum pump, including a pump casing defining a stationary pump stator and housing a rotatable pump rotor, and a motor, including a motor casing in which a stationary motor stator and a rotatable motor rotor are received. A split pot member may be optionally provided between the motor rotor and the motor stator, so that the motor stator is arranged outside of the oil-filled space.

US 5 923 108 discloses a canned motor including a cylindrical thin-walled can member defining a rotor chamber for housing the rotor shaft and a rotor, and a cylindrical thin-walled frame body defining a stator chamber outside of the can member for housing a stator. Such canned motor is suitable for use in a vacuum pump whose shaft is directly coupled to the shaft of a drive motor.

### Summary of the invention

It is an object of the invention to provide a pumping system using an oil-lubricated vacuum pump, which has a more effective sealing system for preventing oil leaks from the pumping chamber.

It is another object of the invention to provide a pumping system using an oil-lubricated vacuum pump, which does not require dynamic seals between the vacuum pump and the motor, and thus can be made in more cost-effective manner than the prior art systems.

These objects are attained by a pumping system as claimed in the appended claims.

More particularly, the invention provides a vacuum pumping system comprising an oil-lubricated vacuum pump and an electric motor driving the pump, in which the system further comprises an oil-tight unit arranged to enclose at least a portion of the motor rotor and forming at least part of a container intended to collect and keep oil inside the motor.

Advantageously, the oil-tight unit has at least a portion arranged between a motor casing and a pump casing.

In embodiments of the invention, the oil-tight unit has at least a portion clamped between a motor casing and a pump casing.

In a possible configuration, said unit comprises a substantially cylindrical jacket made of sheet metal, enclosing the whole of the rotor and forming said container.

According to a preferred feature of this configuration, the jacket has a side wall located in an air gap separating the motor rotor from the motor stator, is open at a first end, where it is clamped between the motor casing and the pump casing, and is closed, at a second end opposite the first end, by a bottom wall accommodated inside the motor casing.

According to another preferred feature of this configuration, the open end of said jacket has a rim that projects radially outwards and forms the jacket portion clamped between the motor casing and the pump casing. In this case, a static seal is provided between a surface of said rim facing the pump casing and the confronting surface of the pump casing.

In an embodiment of the invention, said unit still comprises a substantially cylindrical jacket forming said container. Like in the above-mentioned configuration, the jacket encloses the whole of the rotor, has a side wall located in an air gap separating the motor rotor from the motor stator, and is open at a first end, where it is arranged, preferably clamped, between the motor casing and the pump casing. In this embodiment the jacket is made of a non-metallic material, preferably an oil-resistant, electrically insulating thermosetting or thermoplastic resin, and the side wall is a very thin layer of the resin.

According to a preferred feature of this embodiment of the invention, the jacket is provided, at both ends, with bases having a larger diameter than the side wall and protruding radially outwards from the side wall, and the base provided at the open end engages in oil-tight manner a complementarily shaped axial recess formed in the pump casing.

According to another preferred feature of this embodiment, in the radially protruding portions of said bases, the surfaces turned towards each other are shaped so as to define annular circumferential axial recesses accommodating opposite axial ends of the motor stator.

Advantageously, the circumferential axial recesses are radially delimited towards the outside of the motor by a respective annular axial projection located between the motor stator and the motor casing and, towards the inside of the motor, by a thickened end portion of the side wall of the jacket.

Thanks to the use of a jacket made of resin and having a very thin side wall, there is no need of increasing the air gap between the stator and the rotor of the motor in order to accommodate a metal jacket like that used in the first embodiment and to take into account its thermal expansion.

In a further possible configuration, said unit comprises a first and a second disc-shaped components accommodating opposite axial end portions of both the motor rotor and the motor stator and forming, together with the motor stator, the container intended to collect and keep inside the motor any oil leaking from the pump. The first component forms the portion of the unit clamped between the motor casing and the pump casing and engages in oil-tight manner a complementarily shaped axial recess formed in the pump casing.

The two components are made of a non-metallic material, preferably an oil-resistant, electrically insulating thermosetting or thermoplastic resin.

According to a preferred feature of this further configuration, both the first and the second component have, on their face turned towards the other component, a circumferential axial recess accommodating a respective axial end of the motor stator.

Advantageously, the circumferential axial recesses are radially delimited towards the outside of the motor by a respective first annular axial projection located between the motor stator and the motor casing and, towards the inside of the motor, by a respective second annular axial projection located between the motor stator and the motor rotor.

Having a "container" that is located between the motor stator and the motor casing solves the problems of noise and vibrations that can affect, during operation, a pumping system having a metal jacket located in the air gap between the motor stator and the rotor. Moreover, there is no need to increase the radial size of the air gap in order to allow the insertion of the jacket and to take into account the thermal expansion thereof.

In embodiments of the invention, the base of the jacket opposite the open end and the second disc-shaped component, respectively, can be wholly accommodated inside the motor casing. In the alternative, their surface turned away from the motor can have a conical profile at least partially projecting outside the motor casing. Such conical surface can then be provided with cooling fins.

The embodiments in which the jacket base or the second component partly come out from the motor casing allow a better thermal dissipation than the embodiments in which said elements are wholly accommodated inside the motor casing, since the jacket base or the second component can directly receive the air flow created by an external cooling system of the pumping system. Moreover, the provision of the cooling fins allows increasing the cooling surface and having a more effective circulation of the external flow of cooling air.

### Brief Description of the Figures

Some preferred embodiments of the invention, given by way of non-limiting example, will be described hereinafter with reference to the accompanying drawings, in which:
- Fig. 1 is a longitudinal sectional view of part of a pumping system of the prior art;
- Fig. 2 is a longitudinal sectional view, similar to Fig. 1, of part of a pumping system according to a first configuration;
- Fig. 3 is a longitudinal sectional view of a pumping system according to a second

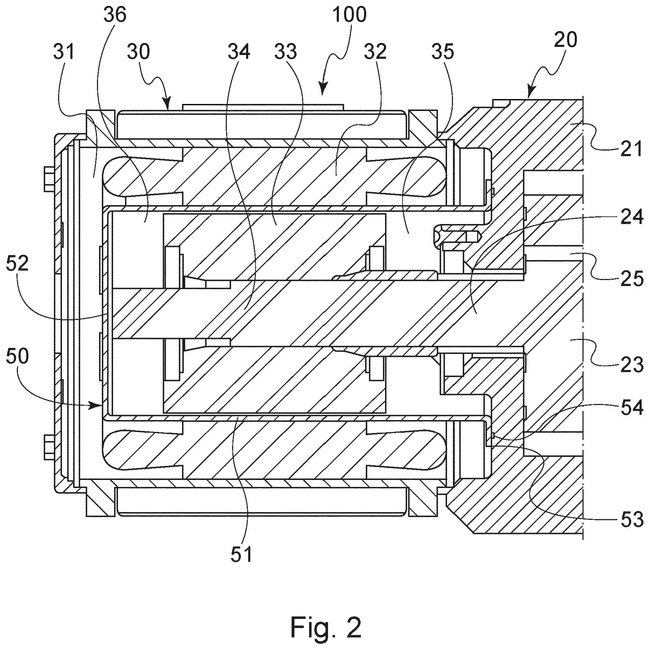

In Figures 2 to 6, the same reference numerals as in Fig.1 have been used to denote the parts of the pump and the motor.

### Detailed Description of a Preferred Embodiment

Fig. 2 shows a first configuration of a pumping system 100, which is not part of the invention. In order to provide a more efficient sealing of motor 30 against oil leakage from the pumping chamber, a sheet-metal jacket 50 is provided which encloses motor rotor 32 and is clamped at one end between motor casing 31 and pump casing 21.

Jacket 50 is a substantially glass-shaped element, i.e. a substantially cylindrical element open at one end (the end clamped between motor casing 31 and pump casing 21), and has a side wall 51 located in the air gap between stator 32 and rotor 33 of motor 30. The open end surrounds the corresponding end wall 35 of the rotor chamber, and bottom wall (or base) 52 opposite the open end is arranged internally of motor casing 31. The open end of jacket 50 has a rim 53 projecting radially outwards, and such rim is the portion of jacket 50 clamped between motor casing 31 and pump casing 21. In order to ensure oil tightness between pump 20 and motor 30, a sealing gasket 54, in particular an O-ring, is provided between rim 53 and the confronting surface of pump casing 21.

The provision of jacket 50 and O-ring 54 results in any oil leaking from the pump environment being collected within jacket 50. As it can be readily appreciated by the skilled in the art, a static seal like O-ring 54 is much less prone to failures than dynamic seal 40 of the prior art. The provision of a jacket collecting any possible oil leak moreover prevents escape of oil (or any other unwanted substance, like gases etc. developed or present for some reason in the pump) and dispersion thereof in the environment.

The provision of sheet-metal jacket 50 and the associated O-ring 54 overcomes the problems connected with using a lip seal, but it is open to improvements as far as some aspects are concerned, in particular:
- since metal jacket 50 is located between stator 32 and rotor 33 of motor 30, it can originate noise and vibrations during operation of pumping system 100;
- an increase of the radial size of the air gap may be required, to allow insertion of jacket 50 itself and to take into account the thermal expansion thereof, thus entailing an increase of the radial size of the whole pumping system 100.

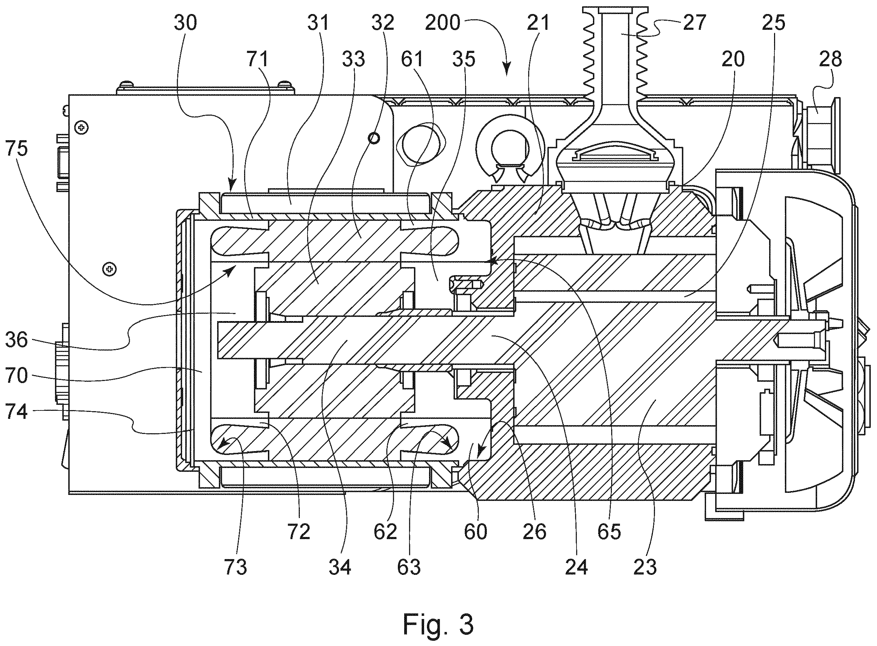

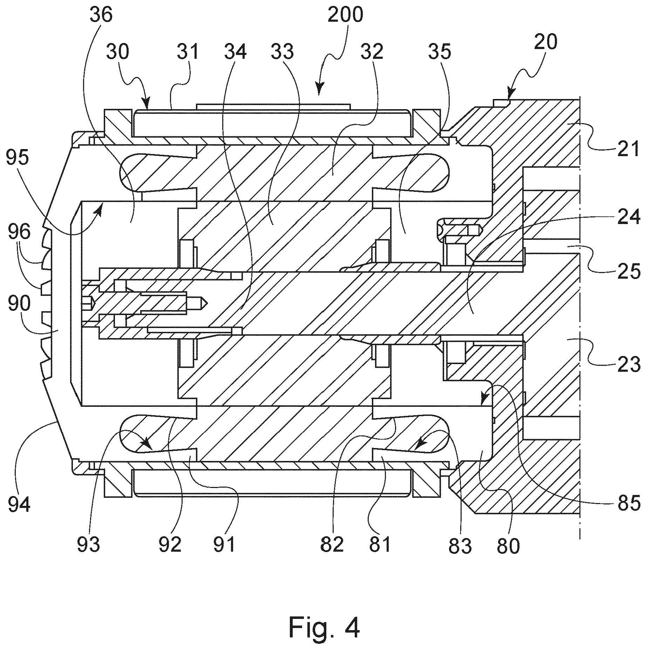

Such improvements are achieved by system 200 shown in Figs. 3 and 4.

More specifically, in the configuration of Fig. 3, a pair of disc-shaped components 60, 70 are provided, which are made of a non-metallic material, in particular a leak-proof, oil-resistant and electrically insulating thermoplastic or thermosetting resin, and are configured
- an increase of the radial size of the air gap may be required, to allow insertion of jacket 50 itself and to take into account the thermal expansion thereof, thus entailing an increase of the radial size of the whole pumping system 100.

Such improvements are achieved by system 200 shown in Figs. 3 and 4.

More specifically, in the configuration of Fig. 3, a pair of disc-shaped components 60, 70 are provided, which are made of a non-metallic material, in particular a leak-proof, oil-resistant and electrically insulating thermoplastic or thermosetting resin, and are configured so as to accommodate opposite axial ends of motor stator 32 and motor rotor 33. With such an arrangement, components 60, 70 form, together with motor stator 32, a sort of "container" collecting any oil leaking from pump 20 and keeping such oil within motor 30.

Component 60 is clamped between pump casing 21 and motor casing 31 and fits in oil-tight manner in a complementarily shaped recess 26 provided in the confronting surface of pump casing 21. A central opening 65 in component 60 accommodates end wall 35 of the rotor chamber. On its surface turned towards component 70, component 60 has two substantially parallel annular axial projections 61, 62 defining an annular axial recess 63 intended to receive one end of stator 32. Outer annular projection 61 is clamped between motor stator 32 and motor casing 31, and inner annular projection 62 is clamped between motor stator 32 on the one side and motor rotor 33 and end wall 35 on the other side.

Component 70 has a central hollow 75 (or possibly a central opening, like component 60) accommodating end wall 36 of the rotor chamber. On its surface turned towards component 60, component 70 has two substantially parallel annular axial projections 71, 72 defining an axial annular recess 73 intended to receive the other end of stator 31. Similarly to projections 61, 62, outer annular projection 71 is clamped between motor stator 32 and motor casing 31, and inner annular projection 72 is clamped between motor stator 32 on the one side and motor rotor 33 and end wall 36 on the other side. Reference 74 denotes the outer surface (i.e. the surface turned away from the motor) or base of component 70, which, in the configuration shown in Fig. 3, is flat so that component 70 is wholly housed within motor casing 31.

The Figure also shows gas inlet and outlet 27, 28, as well as some details of the external body of pumping system 200.

The shape of components 60 and 70 and the engagement of component 60 within recess 26 in pump casing 21 ensure oil tightness without the need to use a sealing gasket like O-ring 54. Moreover, the components are clamped between stator 32 and casing 31 of motor 30, thus no problems of vibrations and noise arise because of the rotation of rotor 33. At the same time, there is no need to increase the air gap between stator 32 and rotor 33 of motor 30, as required in the configuration shown in Fig. 2 in order to accommodate metal jacket 50 and to take into account its thermal expansion. A proper choice of the resin also allows improving the thermal dissipation characteristics not only over the prior art, but also over the solution with metal jacket shown in Fig. 2.

A further improvement is obtained by the configuration of system 200 shown in Fig. 4. Like in the configuration of Fig. 3, a pair of disc-shaped components 80, 90 are provided, which are made of a non-metallic material, in particular a leak-proof, oil-resistant and electrically insulating thermoplastic or thermosetting resin, and are configured so as to accommodate opposite axial ends of motor stator 32 and motor rotor 33. Thus, also components 80, 90 form, together with motor stator 32, a sort of container collecting any oil leaking from pump 20 and keeping such oil within motor 30.

The first disc-shaped component 80 is identical to component 60 shown in Fig. 3 and its elements are denoted by reference numerals corresponding to those used in Fig. 3, yet beginning with digit 8 instead of with digit 6. The second disc-shaped component 90 differs from component 70 shown in Fig. 3 only in respect of the configuration of its base 94, which, instead of being flat like base 74 of component 70, has a surface with conical profile (more particularly, shaped as a frustum of a cone) on its side turned away from motor 30, such that base 94 projects outside motor casing 31. Cooling fins 96 are formed on the portion of base 94 located outside casing 31. The remaining elements of component 90 are identical to those of component 70 and they are denoted by reference numerals corresponding to those used in Fig. 3, yet beginning with digit 9 instead of with digit 7.

Component 90 having a base 94 partly coming out from motor casing 31 allows a better thermal dissipation than component 70 wholly accommodated inside motor casing 31, since base 94 can directly receive the air flow created by the external cooling system (not shown) of pumping system 200. The provision of cooling fins 96 in the portion of base 94 projecting outside motor casing 31 allows increasing the cooling surface and having a more effective circulation of the external cooling air flow.

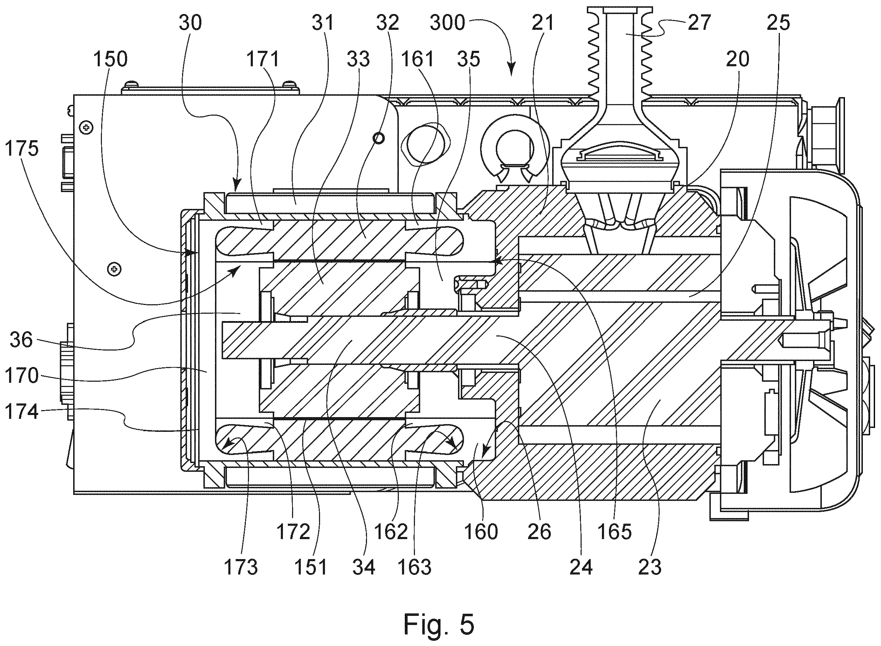

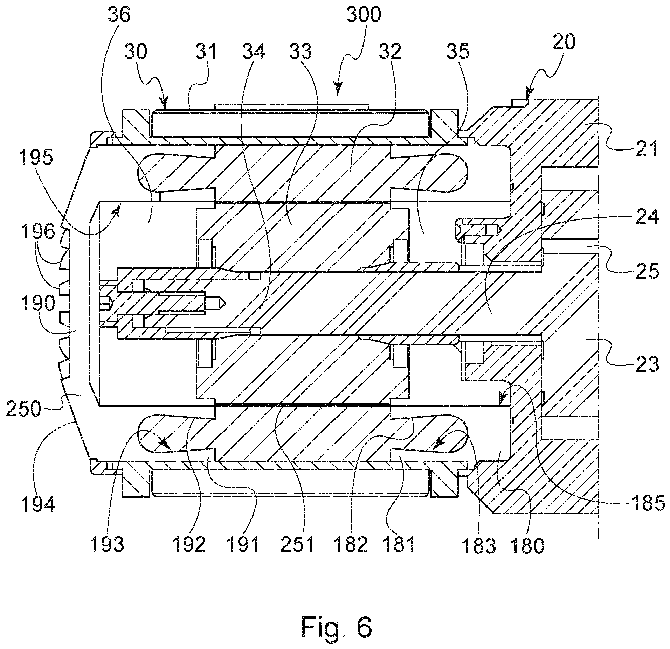

Figs. 5 and 6 show a pumping system 300 according to a preferred embodiment of the invention. In Figs. 5 and 6, elements corresponding or functionally equivalents to elements depicted in Figs. 3 and 4, respectively, are denoted by the same reference numerals preceded by digit 1.

More specifically, in the embodiment of Fig. 5, the container intended to collect and keep inside motor 30 any oil leaking from pump 20 includes a glass-shaped jacket 150, configured so as to accommodate both rotor 33 and the axial ends of stator 32 of motor 30 and made, like the components of system 200, of a non-metallic material, in particular a leak-proof, oil-resistant and electrically insulating thermoplastic or thermosetting resin.

Jacket 150 has a side wall 151 consisting of a thin resin layer located in the air gap between stator 31 and rotor 32 of motor 30, and two bases 160, 170, having a larger diameter than side wall 151, so that said bases protrude radially outwards from side wall 151. Base 160 at the open end of jacket 150 has a central opening 165 accommodating the corresponding closing wall 35 of the rotor chamber, is clamped between pump casing 21 and motor casing 31 and its surface turned towards pump casing 21 is configured so as to fit in oil-tight manner in a complementarily shaped recess 26 provided in the confronting surface of pump casing 21. The other base 170 has a central hollow 175 (or possibly a central opening, like base 160) accommodating end wall 36 of the rotor chamber.

In the radially protruding portions of bases 160, 170, the surfaces turned towards each other are shaped so as to define annular axial recesses 163, 173, respectively, intended to accommodate the opposite axial ends of motor stator 32. More particularly, recess 163 is defined between an edge 161 of base 160, axially projecting towards base 170 and clamped between motor stator 32 and motor casing 31, and a thickened end portion 162 of side wall 161. Similarly, recess 173 is defined between an edge 171 of base 170, axially projecting towards base 160 and clamped between motor stator 32 and motor casing 31, and a thickened end portion 172 of side wall 151. Reference 174 denotes the outer surface (i.e. the surface turned away from the motor) of base 170. In the embodiment shown in Fig. 5, said surface 174 is flat and base 170 is wholly housed within motor casing 31.

The shape of jacket 150, with base 160 engaging recess 26 in pump casing 21, ensures oil tightness without the need to use a sealing gasket like O-ring 54. Moreover, since jacket 150 is made of resin and its side wall 151 is very thin, there is no need of increasing the air gap between stator 31 and rotor 32 of motor 30 to accommodate a metal jacket like jacket 50 (Fig. 2) and to take into account its thermal expansion. Moreover, no problems of vibrations and noise exist. At the same time, like in the configuration of Figs. 3 and 4, a proper choice of the resin also allows improving the thermal dissipation characteristics not only over the prior art but also over the solution with metal jacket shown in Fig. 2.

Referring now to Fig. 6, the container intended to collect and keep inside motor 30 any oil leaking from pump 20 includes a glass-shaped jacket 250, similar to jacket 150 and intended to provide, over jacket 150 shown in Fig. 5, the same improvement as provided by the use of component 90 in pumping system 200 shown in Fig. 4.

Like jacket 150, jacket 250 has a side wall 251 consisting of a thin resin layer located in the air gap between stator 31 and rotor 32 of motor 30, and two bases 180, 190, having a larger diameter than side wall 251, so that said bases protrude radially outwards from side wall 251. Jacket 250 differs from jacket 150 shown in Fig. 5 only in respect of the configuration of base 190, which, instead of having a flat external surface, like base 170 of jacket 150, has an external surface 194 with conical profile (more particularly, shaped as a frustum of a cone), such that surface 194 projects outside motor casing 31. Moreover, cooling fins 196 are formed on the portion of surface 194 located outside casing 31.

Base 190 having a surface 194 partly coming out from motor casing 31 allows a better thermal dissipation than base 170 wholly accommodated inside motor casing 31, since base 190 can directly receive the air flow created by the external cooling system (not shown) of pumping system 300. The provision of cooling fins 196 in the portion of surface 194 outside motor casing 31 allows increasing the cooling surface and having a more effective circulation of the external cooling air flow.

It is to be appreciated that, when pouring the resin for forming the first and second components 60, 70 and 80, 90 of Figs. 3 and 4 or jackets 150 and 250 of Figs. 5 and 6, some resin could become incorporated between the magnets of motor stator 32. In view of this fact, the configuration shown in Figs. 3 and 4 could even be interpreted as a limit case of the embodiment shown in Figs. 5 and 6, where the resin layer forming side walls 151, 251 of jackets 150, 250 has a substantially zero thickness.

Of course, while leaving the principle of the invention unchanged, the embodiments and the construction details can be widely changed with respect to what has been described and shown by way of non-limiting example only, without thereby departing from the scope of the invention as defined in the following claims.

## Claims

1. Vacuum pumping system (300) having an oil-lubricated vacuum pump (20), wherein said vacuum pump comprises a pump casing (21) defining a stationary pump stator and housing a rotatable pump rotor (23), said pump stator and said pump rotor cooperating with each other for pumping a fluid from a pump inlet (27) to a pump outlet (28), and wherein the vacuum pumping system further comprises a motor (30), comprising a motor casing (31) in which a stationary motor stator (32) and a rotatable motor rotor (33) are received, said motor stator and said motor rotor cooperating with each other for driving in rotation said pump rotor (23) by means of a drive shaft (34),
wherein said vacuum pumping system further comprises an oil-tight unit (150; 250) arranged to enclose at least a portion of the motor rotor and forming at least part of a container intended to collect and keep oil inside the motor,
wherein said oil-tight unit comprises a substantially cylindrical jacket (150; 250) forming said container and wherein said jacket (150; 250) encloses the whole of the motor rotor, has a side wall (151; 251) located in an air gap separating the motor rotor from the motor stator, and is open at a first end, where it is arranged between the motor casing and the pump casing, and is closed, at a second end opposite the first end, by a base (170; 190) accommodated at least partly inside the motor casing (31), said jacket (150; 250) being made of an oil-resistant, electrically insulating thermosetting or thermoplastic resin, and the side wall (151; 251) being a very thin layer of the resin, so that there is no need to increase the radial size of the air gap in order to allow the insertion of the jacket (150; 250).

2. Vacuum pumping system (300) according to claim 1, wherein said oil-tight unit (150; 250) has at least a portion (160; 180) clamped between the motor casing (31) and the pump casing (21).

3. Vacuum pumping system (300) according to claim 1, wherein said jacket (150; 250) is provided, at both the first and second end, with bases (160, 170; 180, 190) having a larger diameter than the side wall (151, 251) and protruding radially outwards from the side wall (151, 251).

4. Vacuum pumping system (300) according to claim 3, wherein, in the base (160; 180) provided at the first, open end of the jacket (150; 250), the surface turned towards the pump casing (21) is configured so as to engage in oil-tight manner a complementarily shaped axial recess (26) formed in the pump casing (21).

5. Vacuum pumping system (300) according to claim 3 or 4, wherein, in the radially protruding portions of said bases (160, 170; 180, 190), the surfaces turned towards each other are shaped so as to define annular circumferential axial recesses (163, 173; 183, 193) accommodating opposite axial ends of the motor stator (32).

6. Vacuum pumping system (300) according to claim 5, wherein each of said circumferential axial recesses (163, 173; 183, 193) is radially delimited towards the outside of the motor (30) by an axially projecting edge (161, 171; 181, 191) located between the motor stator (32) and the motor casing (31) and, towards the inside of the motor (30), by a thickened end portion (162, 172; 182, 192) of the side wall (151, 251).

7. Vacuum pumping system (300) according to any of claims 3 to 6, wherein the base (170) provided at the second end of the jacket (150) is wholly received inside the motor casing (31).

8. Vacuum pumping system (300) according to any of claims 3 to 6, wherein the surface (194) of the base (190) provided at the second end of the jacket (250) turned away from the motor (30) has a conical profile at least partially projecting outside the motor casing (31), and wherein said surface (194) projecting outside the motor casing (31) is provided with cooling fins (196).

## Patentansprüche

1. Vakuumpumpsystem (300) mit ölgeschmierter Vakuumpumpe (20), wobei die Vakuumpumpe ein Pumpengehäuse (21) umfasst, das einen feststehenden Pumpenstator bildet und einen drehbaren Pumpenrotor (23) aufnimmt, wobei der Pumpenstator und der Pumpenrotor miteinander zusammenwirken, um eine Flüssigkeit von einem Pumpeneinlass (27) zu einem Pumpenauslass (28) zu pumpen, und wobei das Vakuumpumpsystem weiter einen Motor (30) umfasst, der ein Motorgehäuse (31) umfasst, in dem ein feststehender Motorstator (32) und ein drehbarer Motorrotor (33) aufgenommen sind, wobei der Motorstator und der Motorrotor miteinander zusammenwirken, um den Pumpenrotor (23) mittels einer Antriebswelle (34) in Drehung zu versetzen,
wobei das Vakuumpumpsystem weiter eine öldichte Einheit (150; 250) umfasst, die so ausgelegt ist, dass sie mindestens einen Teil des Motorrotor umschließt und mindestens einen Teil eines Behälters bildet, der dazu bestimmt ist, Öl im Motor aufzufangen und dort zu enthalten,
wobei die öldichte Einheit einen im Wesentlichen zylindrischen Mantel (150; 250) umfasst, der den Behälter bildet, und wobei der Mantel (150; 250) den gesamten Motorrotor umschließt, eine in einem den Motorrotor vom Motorstator trennenden Luftspalt angeordnete Seitenwand (151; 251) hat, und an einem Ende, an dem der Mantel zwischen dem Motorgehäuse und dem Pumpengehäuse angeordnet ist, offen ist und an einem dem ersten Ende gegenüberliegenden zweiten Ende durch einen mindestens teilweise innerhalb des Motorgehäuses (31) untergebrachten Boden (170; 190) geschlossen ist, wobei der Mantel (150; 250) aus einem ölbeständigen, elektrisch isolierenden duroplastischen oder thermoplastischen Harz besteht, und wobei die Seitenwand (151; 251) eine sehr dünne Schicht des Harzes ist, so dass die radiale Abmessung des Luftspalts nicht vergrößert werden muss, um das Einführen des Mantels (150; 250) zu ermöglichen.

2. Vakuumpumpsystem (300) nach Anspruch 1, wobei die öldichte Einheit (150; 250) mindestens einen Abschnitt (160; 180) hat, der zwischen dem Motorgehäuse (31) und dem Pumpengehäuse (21) geklemmt ist.

3. Vakuumpumpsystem (300) nach Anspruch 1, wobei der Mantel (150; 250) sowohl am ersten als auch am zweiten Ende mit Böden (160, 170; 180, 190) versehen ist, die einen größeren Durchmesser als die Seitenwand (151, 251) haben und radial nach außen aus der Seitenwand (151, 251) herausragen.

4. Vakuumpumpsystem (300) nach Anspruch 3, wobei, in dem am ersten, offenen Ende des Mantels (150; 250) vorgesehenen Boden (160; 180), die zum Pumpengehäuse (21) hin gerichtete Fläche so ausgelegt ist, dass sie öldicht in eine komplementär geformte axiale Aussparung (26) eingreift, die im Pumpengehäuse (21) ausgebildet ist.

5. Vakuumpumpsystem (300) nach Anspruch 3 oder 4, wobei, in den radial herausragenden Abschnitten der Böden (160, 170; 180, 190), die einander zugewandten Flächen so geformt sind, dass sie ringförmige, umlaufende, axiale Aussparungen (163, 173; 183, 193) definieren, die die gegenüberliegenden axialen Enden des Motorstators (32) aufnehmen.

6. Vakuumpumpsystem (300) nach Anspruch 5, wobei jede der umlaufenden, axialen Aussparungen (163, 173; 183, 193) zur Außenseite des Motors (30) hin durch eine zwischen dem Motorstator (32) und dem Motorgehäuse (31) angeordnete, axial vorstehende Kante (161, 171; 181, 191), und zur Innenseite des Motors (30) hin durch einen verdickten Endabschnitt (162, 172; 182, 192) der Seitenwand (151, 251) radial begrenzt ist.

7. Vakuumpumpsystem (300) nach einem der Ansprüche 3 bis 6, wobei der am zweiten Ende des Mantels (150) vorgesehene Boden (170) vollständig im Motorgehäuse (31) untergebracht ist.

8. Vakuumpumpsystem (300) nach einem der Ansprüche 3 bis 6, wobei die Fläche (194) des am vom Motor (30) abgewandten, zweiten Ende des Mantels (250) vorgesehenen Bodens (190) ein konisches Profil aufweist, das zumindest teilweise aus dem Motorgehäuse (31) herausragt, und wobei diese aus dem Motorgehäuse (31) herausragende Fläche (194) mit Kühlrippen (196) versehen ist.

## Revendications

1. Système de pompage à vide (300) comprenant une pompe à vide lubrifiée à l'huile (20), dans lequel cette pompe à vide comprend un corps de pompe (21) définissant un stator de pompe fixe et recevant un rotor de pompe (23) rotatif, ce stator de pompe et ce rotor de pompe coopérant l'un avec l'autre pour pomper un fluide d'une entrée de pompe (27) vers une sortie de pompe (28), et dans lequel le système de pompage à vide comprend en outre un moteur (30), comprenant un corps de moteur (31) dans lequel sont logés un stator de moteur fixe (32) et un rotor de moteur (33) rotatif, ce stator de moteur et ce rotor de moteur coopérant l'un avec l'autre pour entraîner en rotation ce rotor de pompe (23) au moyen d'un arbre d'entraînement (34),
dans lequel ce système de pompage à vide comprend en outre une unité étanche à l'huile (150; 250) agencée pour enfermer au moins une partie du rotor du moteur et formant au moins une partie d'un récipient destiné à collecter et à retenir l'huile à l'intérieur du moteur, dans lequel cette unité étanche à l'huile comprend une enveloppe sensiblement cylindrique (150; 250) formant ce récipient et dans lequel cette enveloppe (150; 250) entoure complétement le rotor du moteur, elle comporte une paroi latérale (151; 251) située dans un entrefer séparant le rotor du moteur du stator du moteur, et elle est ouverte à une première extrémité, où elle est disposée entre le corps du moteur et le corps de la pompe, et est fermée, à une deuxième extrémité opposée à la première extrémité, par une base (170; 190) agencée au moins en partie à l'intérieur du corps du moteur (31), cette enveloppe (150; 250) étant constituée d'une résine thermodurcissable ou thermoplastique résistante à l'huile et électriquement isolante, et cette paroi latérale (151; 251) étant une couche très mince de cette résine, de sorte qu'il n'est pas nécessaire d'augmenter la dimension radiale de cet entrefer pour permettre l'insertion de l'enveloppe (150; 250).

2. Système de pompage à vide (300) selon la revendication 1, dans lequel cette unité étanche à l'huile (150; 250) présente au moins une partie (160; 180) serrée entre ce corps de moteur (31) et ce corps de pompe (21).

3. Système de pompage à vide (300) selon la revendication 1, dans lequel cette enveloppe (150; 250) est pourvue, tant à la première qu'à la deuxième extrémité, de bases (160, 170; 180, 190) présentant un diamètre supérieur à celui de cette paroi latérale (151, 251) et faisant saillie radialement vers l'extérieur à partir de cette paroi latérale (151, 251).

4. Système de pompage à vide (300) selon la revendication 3, dans lequel, dans la base (160; 180) prévue à la première extrémité ouverte de cette enveloppe (150; 250), la surface tournée vers ce corps de pompe (21) est conformée de manière à s'engager de façon étanche à l'huile dans un évidement axial (26) de forme complémentaire formé dans ce corps de pompe (21).

5. Système de pompage à vide (300) selon la revendication 3 ou 4, dans lequel, au niveau des parties saillantes radialement de ces bases (160, 170; 180, 190), les surfaces tournées l'une vers l'autre sont conformées de manière à définir des évidements axiaux circonférentiels (163, 173; 183, 193) annulaires recevant les extrémités axiales opposées du stator de moteur (32).

6. Système de pompage à vide (300) selon la revendication 5, dans lequel chacun de ces évidements axiaux circonférentiels (163, 173; 183, 193) est délimité radialement vers l'extérieur du moteur (30) par un bord en saillie axiale (161, 171; 181, 191) situé entre le stator de moteur (32) et le corps de moteur (31) et, vers l'intérieur du moteur (30), par une partie d'extrémité épaissie (162, 172; 182, 192) de cette paroi latérale (151, 251).

7. Système de pompage à vide (300) selon l'une quelconque des revendications 3 à 6, dans lequel la base (170) prévue à la deuxième extrémité de l'enveloppe (150) est entièrement reçue à l'intérieur du corps de moteur (31).

8. Système de pompage à vide (300) selon l'une quelconque des revendications 3 à 6, dans lequel la surface (194) de la base (190) prévue à la deuxième extrémité de l'enveloppe (250) opposée au moteur (30) présente un profil conique dépassant au moins partiellement à l'extérieur du corps de moteur (31), et dans lequel cette surface (194) dépassant à l'extérieur du corps de moteur (31) est pourvue d'ailettes de refroidissement (196).
